# EUROPÄISCHE PATENTSCHRIFT

(11) **EP 1 190 917 B1**
(45) Veröffentlichungstag und Bekanntmachung des Hinweises auf die Patenterteilung: **24.11.2004**
(21) Anmeldenummer: 01118787.9
(22) Anmeldetag: 09.08.2001
(51) Int. Cl.: B60R 21/20, B60R 21/01, B60Q 5/00

(54) **Gassack-Modul mit Multifunktions-Leiterfolie**
Airbag module with multifunction foil conductor
Module de sac de sécurité gonflable à conducteur à feuille multifonctionnel

(30) Priorität: 21.09.2000 DE 20016386 U
(43) Veröffentlichungstag der Anmeldung: 27.03.2002
(73) Patentinhaber: TRW Automotive Safety Systems GmbH, 63743 Aschaffenburg (DE)
(72) Erfinder: Helmstetter, Matthias, 63743 Aschaffenburg (DE)
(74) Vertreter: Sties, Jochen, Dipl.-Ing.

(56) Entgegenhaltungen:
- WO-A-00/50264
- WO-A-98/02337
- US-A- 5 002 306
- US-A- 5 303 952
- US-A- 5 331 124

## Beschreibung

### Die Erfindung betrifft ein Gassack-Modul

Aus der gattungsbildenden US-A-6,062,595 ist ein Gassack-Modul für ein Fahrzeuglenkrad bekannt, mit einem Träger, einem Gasgenerator, der an dem Träger angebracht ist, und einer Multifunktions-Leiterfolie. Die Multifunktions-Leiterfolie ist eingegossen in einer Abdeckung angebracht, die einen mittels des Gasgenerators aufblasbaren Gassack im Ruhezustand abdeckt. Die Multifunktions-Leiterfolie ist mit mehreren Schaltern versehen, mittels denen beispielsweise die Klimaanlage oder die Radioanlage des Fahrzeugs gesteuert werden kann, in welchem das Gassack-Modul angebracht ist. Nachteilig bei dem bekannten Gassack-Modul ist, daß die Multifunktions-Leiterfolie in einem Bereich des Gassack-Moduls angebracht ist, durch den hindurch sich nach Aktivierung des Gasgenerators der Gassack entfaltet. Es muß daher sowohl bei der Konstruktion als auch bei der Montage sorgfältig darauf geachtet werden, daß die Leiterfolie zusammen mit den darauf montierten Schaltern weder das Entfalten beeinträchtigt noch einen Fahrzeuginsassen beim Entfalten gefährdet.

Aus der US-A-5,303,952 ist eine Kontakteinheit bekannt, die zwischen einem Fahrzeuglenkrad und einem im Inneren des Lenkrades montierten Gassack-Moduls angeordnet ist. Die Kontakteinheit kann flexible Leiterbahnen aufweisen.

Aus der WO-A-98/02337 ist ein Fahrzeuglenkrad bekannt, in welchem ein Gassack-Modul montiert ist. Zwischen dem Gassack-Modul und dem Lenkrad ist eine Schaltereinheit angeordnet, die zur Betätigung einer Hupe dient.

Die Aufgabe der Erfindung besteht somit darin, ein Gassack-Modul der eingangs genannten Art dahingehend weiterzubilden, daß sich eine einfachere Konstruktion mit geringeren Kosten ergibt. Zu diesem Zweck ist erfindungsgemäß ein Gassack-Modul zum Einbau in ein Fahrzeuglenkrad vorgesehen, mit einem Träger, einem Gasgenerator, der an dem Träger angebracht ist, und einer Multifunktions-Leiterfolie, die auf der Rückseite des Gasgenerators angeordnet und an der Rückseite des Trägers angebracht ist. Auf diese Weise kann eine konventionelle, kostengünstige Abdeckung für den Gassack verwendet werden, während gleichzeitig eine Multifunktions-Leiterfolie verwendet werden kann. Diese erlaubt, eine Vielzahl von Funktionen in ein einziges Bauteil zu integrieren, das dann mit einem einzigen Stecker angeschlossen werden kann. So ermöglicht es die Leiterfolie, den Gasgenerator sowohl anzuschließen als auch zu erden sowie eine Vielzahl von weiteren Funktionen zu integrieren, beispielsweise einen Hupenkontakt für eine Hupenbetätigung. Zur Übertragung der Signale für die verschiedenen Funktionen können an der Leiterfolie entweder Stecker vorgesehen sein, die bei der Montage des Gasgenerators in Gegenstecker am Lenkrad eingesteckt werden, oder direkt Schalterbereiche, die durch Druck auf eine Betätigungsfläche am Lenkrad geschlossen oder geöffnet werden. Auf diese Weise läßt sich mit minimalem Aufwand eine Vielzahl von Funktionen schalten.

Vorteilhafte Ausgestaltungen der Erfindung ergeben sich aus den Unteransprüchen.

Die Erfindung wird nachfolgend anhand bevorzugter Ausführungsformen beschrieben, die in den beigefügten Zeichnungen dargestellt sind. In diesen zeigen:
- Figur 1 eine schematische Draufsicht auf ein Gassack-Modul mit einer Multifunktions-Leiterfolie gemäß einer ersten Ausführungsform;
- Figur 2 schematisch einen Schnitt entlang der Ebene II-II von Figur 1;
- Figur 3 schematisch einen Schnitt entlang der Ebene III-III von Figur 1; und
- Figur 4 eine schematische Draufsicht auf ein Gassack-Modul mit einer Leiterfolie gemäß einer zweiten Ausführungsform.

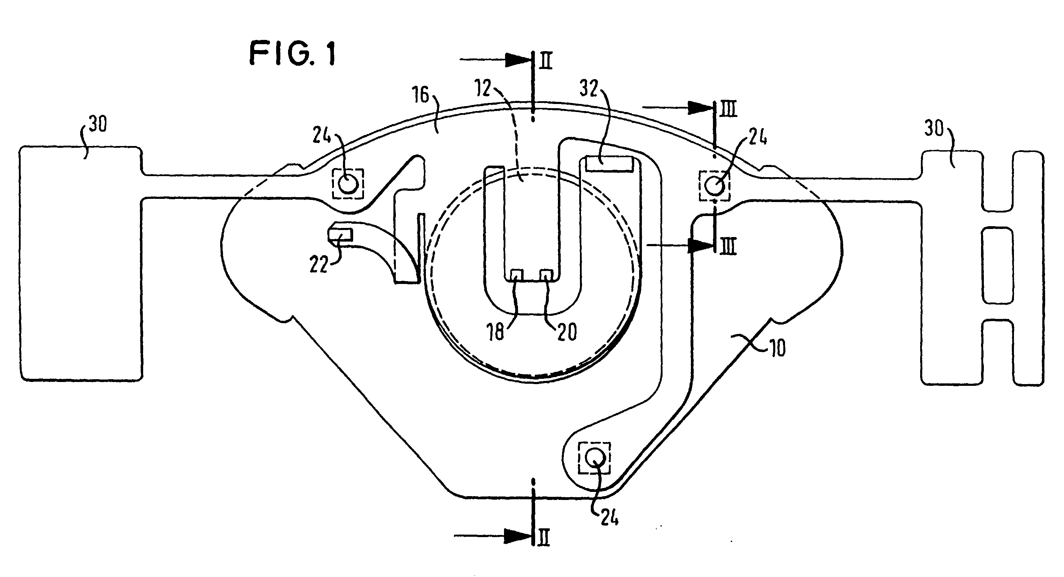

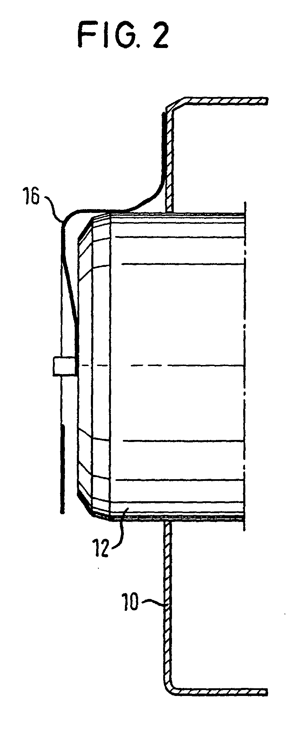

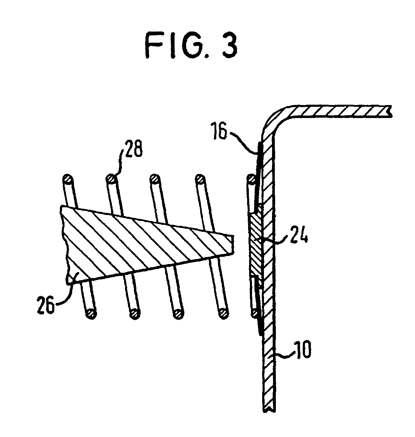

In Figur 1 ist schematisch ein Gassack-Modul gezeigt, das einen Träger 10 sowie einen Gasgenerator 12 aufweist. Der Gasgenerator 12 ist ein zweistufiger Gasgenerator, weist also zwei unabhängig voneinander zündbare gaserzeugende Ladungen auf Auf der Rückseite des Gasgenerators sowie des Trägers, also auf der Seite, die bei der späteren Einbaulage in einem Fahrzeug vom Fahrzeuginsassen abgewandt ist, ist eine Multifunktions-Leiterfolie 16 (siehe auch die Figuren 2 und 3) angeordnet. Die Leiterfolie 16 weist in an sich herkömmlicher Weise eine Vielzahl von elektrischen Leiterbahnen auf, die voneinander isoliert sind.

Die Leiterfolie 16 ist mit zwei Gasgenerator-Steckern 18, 20 versehen, die zum Anschließen der ersten und der zweiten Ladung des Gasgenerators 12 dienen. Die Leiterfolie 16 ist ferner mit einem Erdungsstecker 22 versehen, der zum Erden des Gasgenerators vorgesehen ist. Weiterhin weist die Leiterfolie 16 drei Hupenkontakte 24 (siehe Figur 3) auf. Die Leiterfolie ist im Bereich der Hupenkontakte 34 mit dem Träger 10 verklebt, beispielsweise durch ein doppelseitiges Klebeband. Mit den Hupenkontakten wirkt jeweils ein Betätigungsfortsatz 26 zusammen, der am Lenkrad so angebracht ist, daß der Hupenkontakt geschlossen wird, wenn das Gassack-Modul entgegen der Wirkung einer Rückstellfeder 28 vom Fahrzeuginsassen weggedrückt wird. Eine hierfür geeignete Anbringung des Trägers und des Gasgenerators ist allgemein bekannt, so daß auf die Einzelheiten hier nicht eingegangen werden braucht.

Die Leiterfolie 16 ist außerdem mit zwei Multifunktions-Schalterbereichen 30 versehen, die mit Multifunktionsschaltern bestückt sind, die dafür vorgesehen sind, in dem Lenkrad montiert zu werden. Die Multifunktionsschalter sind vorzugsweise SMD-Bauteile, die direkt auf die Leiterfolie aufgebracht werden können. Mit diesen Multifunktionsschaltern kann beispielsweise eine Radioanlage oder eine Klimaanlage gesteuert werden, ohne daß der Fahrer die Hände vom Lenkrad nehmen muß.

Die Leiterfolie 16 ist schließlich mit einem einzigen Kombistecker 32 versehen, der dazu dient, in einen komplementären Stecker am Lenkrad oder ggf auch am Fahrzeug eingesteckt zu werden. Über diesen einzigen Kombistecker werden sämtliche Leiterbahnen der Leiterfolie angeschlossen, so daß die integrierten Funktionen geschaltet werden können, also Aktivieren des Gasgenerators, Schalten der Hupe, Steuern der Radioanlage, der Klimanalage, etc.

Der Vorteil des erfindungsgemäßen Gassack-Moduls besteht darin, daß bei der Montage nur ein einziger Stecker am Lenkrad bzw. am Fahrzeug eingesteckt werden muß, nämlich der Kombistecker 32, damit alle Leiterbahnen angeschlossen sind. Bei bisherigen Konstruktionen war es erforderlich, beispielsweise den Gasgenerator oder andere Schalter separat anzuschließen.

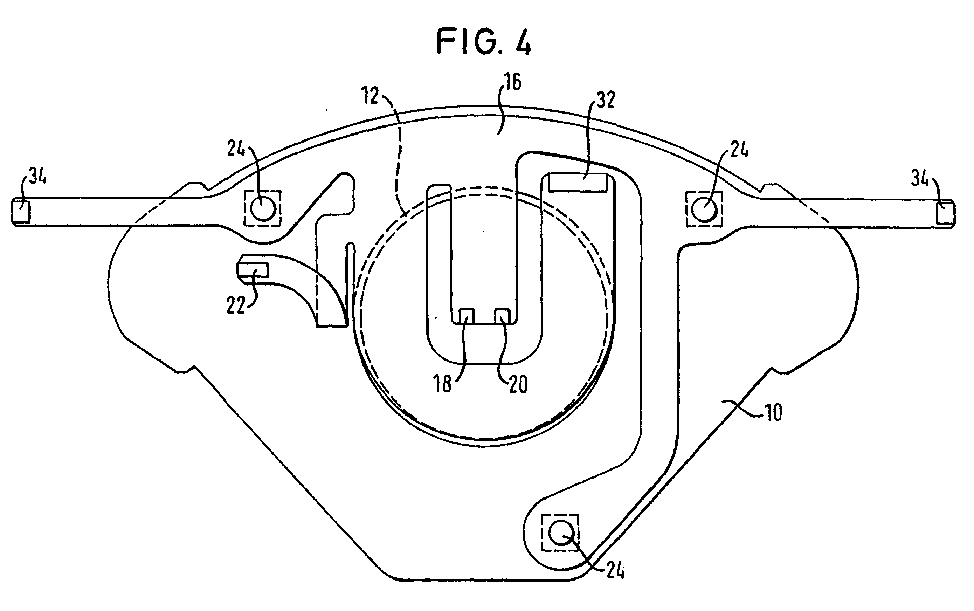

In Figur 4 ist ein Gassack-Modul mit einer Leiterfolie gemäß einer zweiten Ausführungsform gezeigt. Im Unterschied zur vorangegangenen Ausführungsform ist die Leiterfolie hier anstelle der Multifunktions-Schalterbereiche mit zwei Multisteckern 34 versehen, die in Gegenstücke am Lenkrad eingesteckt werden, die dort angeordneten Multifunktions-Schaltern zugeordnet sind. Auch bei dieser Ausführungsform ergibt sich ein besonders geringer Montageaufwand.

## Patentansprüche

1. Gassack-Modul zum Einbau in ein Fahrzeuglenkrad, mit einem Träger (10), einem Gasgenerator (12), der an dem Träger angebracht ist, und einer Multifunktions-Leiterfolie (16), **dadurch gekennzeichnet, daß** diese auf der Rückseite des Gasgenerators (12) angeordnet und an der Rückseite des Trägers (10) angebracht ist.

2. Gassack-Modul nach Anspruch 1, **dadurch gekennzeichnet, daß** die Leiterfolie mit mindestens einem Kontakt (24) für eine Hupenbetätigung versehen ist, der von einem am Fahrzeuglenkrad angebrachten Gegenstück (26) geschlossen werden kann.

3. Gassack-Modul nach einem der Ansprüche 1 und 2, **dadurch gekennzeichnet, daß** die Leiterfolie mit mindestens einem Stecker (18, 20) zum Anschluß des Gasgenerators versehen ist.

4. Gassack-Modul nach Anspruch 3, **dadurch gekennzeichnet, daß** der Gasgenerator ein zweistufiger Gasgenerator ist und daß zwei Stecker (18, 20) für den Gasgenerator an der Leiterfolie vorgesehen sind.

5. Gassack-Modul nach einem der vorhergehenden Ansprüche, **dadurch gekennzeichnet, daß** die Leiterfolie (16) mit einem Stecker (22) zum Erden des Gasgenerators versehen ist.

6. Gassack-Modul nach einem der vorhergehenden Ansprüche, **dadurch gekennzeichnet, daß** die Leiterfolie (16) mit einem einzigen Kombistecker (32) versehen ist, der dafür vorgesehen ist, in einen Gegenstecker am Lenkrad eingesteckt zu werden, um die Leiterfolie anzuschließen.

7. Gassack-Modul nach einem der vorhergehenden Ansprüche, **dadurch gekennzeichnet, daß** die Leiterfolie mit einem Multistecker (34) versehen ist, der dafür vorgesehen ist, in ein Gegenstück am Lenkrad eingesteckt zu werden, das Multifunktions-Schaltern zugeordnet ist.

8. Gassack-Modul nach einem der vorhergehenden Ansprüche, **dadurch gekennzeichnet, daß** die Leiterfolie mit einem Multifunktions-Schalterbereich (30) versehen ist, der mit Multifunktionsschaltern bestückt ist, die dafür vorgesehen sind, in dem Lenkrad montiert zu werden.

## Claims

1. A gas bag module for installation in a vehicle steering wheel, comprising a carrier (10), a gas generator (12) mounted to the carrier, and a multi-function conductor film (16), **characterized in that** the multi-function conductor film is disposed on the rear side of the gas generator (12) and fitted to the rear side of the carrier (10).

2. The gas bag module as claimed in claim 1, **characterized in that** the conductor film is provided with at least one contact (24) for actuating a horn, the contact being adapted to be closed by a counterpart (26) mounted to the vehicle steering wheel.

3. The gas bag module as claimed in any of claims 1 and 2, **characterized in that** the conductor film is provided with at least one plug (18, 20) for connecting the gas generator.

4. The gas bag module as claimed in claim 3, **characterized in that** the gas generator is a two-stage gas generator, and that the conductor film is provided with two plugs (18, 20) for the gas generator.

5. The gas bag module as claimed in any of the preceding claims, **characterized in that** the conductor film (16) is provided with a plug (22) for grounding the gas generator.

6. The gas bag module as claimed in any of the preceding claims, **characterized in that** the conductor film (16) is provided with a single combination plug (32), which is provided to be plugged into a counterplug at the steering wheel in order to connect the conductor film.

7. The gas bag module as claimed in any of the preceding claims, **characterized in that** the conductor film is provided with a multi-purpose plug (34), which is provided to be plugged into a counterpart at the steering wheel, the counterpart being associated with multi-function switches.

8. The gas bag module as claimed in any of the preceding claims, **characterized in that** the conductor film is provided with a multi-function switch area (30) which is equipped with multi-function switches provided to be mounted in the steering wheel.

## Revendications

1. Module de coussin à gaz destiné à être monté dans un volant de direction de véhicule, comportant un support (10), un générateur de gaz (12) qui est monté sur le support, et une feuille conductrice à multifonctions (16), **caractérisé en ce que** celle-ci est agencée sur la face postérieure du générateur de gaz (12) et montée sur la face postérieure du support (10).

2. Module de coussin à gaz selon la revendication 1, **caractérisé en ce que** la feuille conductrice est pourvue d'au moins un contact (24) pour un actionnement de klaxon, lequel peut être fermé par une pièce antagoniste (26) montée sur le volant de direction du véhicule.

3. Module de coussin à gaz selon l'une des revendications 1 et 2, **caractérisé en ce que** la feuille conductrice est pourvue d'au moins une fiche (18, 20) pour le branchement au générateur de gaz.

4. Module de coussin à gaz selon la revendication 3, **caractérisé en ce que** le générateur de gaz est un générateur de gaz à deux étages, et **en ce que** deux fiches (22) pour le générateur de gaz sont prévues sur la feuille conductrice.

5. Module de coussin à gaz selon l'une des revendications précédentes, **caractérisé en ce que** la feuille conductrice (16) est pourvue d'une fiche (22) pour mettre à la terre le générateur de gaz.

6. Module de coussin à gaz selon l'une des revendications précédentes, **caractérisé en ce que** la feuille conductrice (16) est pourvue d'une seule fiche combinée (32) qui est prévue pour être enfichée dans une fiche antagoniste sur le volant de direction, pour brancher la feuille conductrice.

7. Module de coussin à gaz selon l'une des revendications précédentes, **caractérisé en ce que** là feuille conductrice est pourvue d'une multi-fiche (34) qui est prévue pour être enfichée dans une pièce antagoniste sur le volant de direction, laquelle est associée à des commutateurs à multifonctions.

8. Module de coussin à gaz selon l'une des revendications précédentes, **caractérisé en ce que** la feuille conductrice est pourvue d'une zone de commutateurs à multifonctions (30) qui est équipée de commutateurs à multifonctions qui sont prévus pour être montés sur le volant de direction.
